(19) **Europäisches Patentamt / European Patent Office / Office européen des brevets**

(11) **EP 3 391 091 B1**

(12) **FASCICULE DE BREVET EUROPEEN**

(45) Date de publication et mention
de la délivrance du brevet:
**04.12.2019 Bulletin 2019/49**

(21) Numéro de dépôt: **16808634.6**

(22) Date de dépôt: **08.12.2016**

(51) Int Cl.:
**G01T 1/36** (2006.01)

(86) Numéro de dépôt international:
**PCT/EP2016/080186**

(87) Numéro de publication internationale:
**WO 2017/102528 (22.06.2017 Gazette 2017/25)**

(54) **PROCEDE ET DISPOSITIF DE DETECTION ET D'IDENTIFICATION DE CORPUSCULES**

VERFAHREN UND VORRICHTUNG ZUR ERKENNUNG UND IDENTIFIZIERUNG VON KORPUSKELN

METHOD AND DEVICE FOR DETECTING AND IDENTIFYING CORPUSCLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2015 FR 1562294**

(43) Date de publication de la demande:
**24.10.2018 Bulletin 2018/43**

(73) Titulaire: **Commissariat à l'Énergie Atomique et aux Énergies Alternatives
75015 Paris (FR)**

(72) Inventeurs:
• **MONTAGU, Thierry
91470 Limours (FR)**
• **BARAT, Eric
91470 Limours (FR)**

• **DAUTREMER, Thomas
91120 Palaiseau (FR)**

(74) Mandataire: **Dudouit, Isabelle et al
Marks & Clerk France
Conseils en Propriété Industrielle
Immeuble " Visium "
22, avenue Aristide Briand
94117 Arcueil Cedex (FR)**

(56) Documents cités:
**GB-A- 2 502 307**

• **Iowa Research Online ET AL: "University of Iowa Statistical detection with weak signals via regularization", , 1 janvier 2012 (2012-01-01), XP055303195, Extrait de l'Internet: URL:http://ir.uiowa.edu/cgi/viewcontent.cg i?article=3395&context=etd [extrait le 2016-09-16]**

**Description**

L'invention concerne un procédé et un dispositif permettant la détection et l'identification de radioéléments ou plus généralement de corpuscules ayant une signature se présentant sous la forme d'un spectre en énergie.

La spectrométrie est une méthode de mesure connue et utilisée dans de nombreux contextes pour détecter et identifier des éléments présents dans un objet et/ou une personne. Par exemple, la spectrométrie nucléaire consiste à construire un histogramme lié aux amplitudes des signaux issus des interactions entre les rayonnements émis par des objets et un détecteur. Cet histogramme, une fois calibré en énergie, est communément appelé spectre et présente en général des formes de pics superposés à un fond. Le pic et le fond peuvent revêtir des formes complexes, dépendant du détecteur et/ou des conditions expérimentales. La spectrométrie permet d'identifier les radioéléments présents dans le spectre et de mesurer leur activité.

Le domaine concerné est notamment celui des applications d'identification dites « précoces », rapides, avec peu de coups accumulés dans le spectre d'énergie observé et mesuré.

La plupart des méthodes connues de l'art antérieur reposent principalement sur l'utilisation de méthodes d'inversion basées sur des algorithmes d'optimisation, de type moindres carrés avec diverses régularisations. La publication de E.Bai et al, intitulée «Detection of radionuclides from weak and poorly resolved spectra using lasso and subsampling techniques », radiation measurements, 46(10) 1138 - 1146, 2011, décrit un procédé qui repose sur une régression pénalisée basée sur l'algorithme Lasso connu de l'homme du métier, décrit par exemple dans le document de P. Kump, E. Bai, K. Chan, W. Eichinger, intitulé « A robust method for detecting nuclear materials when the underlying model is inexact », Radiation Measurements, 59:144 - 150, 2013 ou dans le document de E. Bai, K. Chan, W. Eichinger, P. Kump, « Détection of radionucleides from weak and poorly resolved spectra using Lasso and subsampling techniques », Radiation Measurements, 46(10):1138 - 1146, 2011. Il est aussi connu d'utiliser l'algorithme de reconstruction itérative de maximum de vraisemblance- maximisation d'espérance, ou ML-EM (abrégé anglo-saxon de Maximum Likelihood Expectation Maximization). Un algorithme EM avec contrainte de parcimonie est décrit au chapitre 3 de la thèse de Jinzheng Li, intitulée « Statistical detection with weak signais via regularization», University of Iowa, dans le cadre d'une régression de Poisson connue de l'homme du métier.

La demande de brevet US 2007/0108379 décrit un procédé d'identification qui repose sur une analyse en composantes principales du spectre.

Le brevet FR1250431 propose une méthode basée sur l'application de tests statistiques.

La demande de brevet FR1552415 propose un cadre bayésien non paramétrique d'identification.

Ces méthodes sont efficaces pour détecter et identifier des radioéléments. Toutefois, elles ne permettent pas de quantifier un paramètre relatif à l'incertitude associée à la mesure de la proportion d'un élément détecté et identifié, excepté pour le document FR1552415.

Il existe actuellement un besoin de disposer d'une méthode d'identification de radioéléments, de manière plus générale de corpuscules, permettant de quantifier un élément présent dans un spectre et d'associer à cette mesure une quantification de l'incertitude sur la valeur trouvée. Le procédé selon l'invention offre ainsi une méthode d'identification plus fiable que les méthodes connues de l'art antérieur.

L'invention concerne un procédé pour détecter et quantifier la présence d'éléments ou de corpuscules par spectrométrie en utilisant la connaissance d'un ou de plusieurs spectres de référence, caractérisé en ce qu'il comporte au moins les étapes suivantes :

- Mesurer un ou plusieurs rayonnements issus d'une ou plusieurs sources contenant lesdits éléments, représenter lesdites mesures sous la forme d'un spectre Y exprimé sous la forme d'un vecteur $Y_{M \times 1}$ de M canaux d'énergie résultant de la somme des N spectres de référence, chaque composante du vecteur $Y_{M \times 1}$ correspondant à la somme des contributions d'un j-ème élément représenté par son spectre de référence au i-ème canal du spectre observé, pour N spectres mesurés un élément étant associé à une proportion,

$$\begin{bmatrix} y_1 \\ \vdots \\ y_M \end{bmatrix} = P\left( \begin{bmatrix} a_{11} & \cdots & a_{1N} \\ \vdots & \ddots & \vdots \\ a_{M1} & \cdots & a_{MN} \end{bmatrix} \begin{bmatrix} w_1 \\ \vdots \\ w_N \end{bmatrix} \right)$$

avec :

$$y_i = \sum_{j=1}^{N} x_{ij} \, (i = 1, \ldots, M)$$

coefficient du vecteur $Y_{M \times 1}$ avec i=1...M canaux d'énergie et j=1... N spectres mesurés,

- Initialiser avec des valeurs aléatoires le vecteur W des proportions des radioéléments présents dans le spectre et le vecteur X des contributions des éléments représentés par leur spectre de référence aux M canaux d'énergie,
- Définir un nombre L d'itérations et exécuter au moins les deux étapes suivantes pour l= 1 à L :

  - Tirer une composante $x_{ij}^{(l+1)}$ du vecteur Y du spectre observé correspondant à l'itération (l+1) pour un élément j donné et un canal de référence i, en utilisant une loi multinomiale *Mult()* et en considérant les valeurs obtenues

$$Mult\left(y_i; \frac{a_{i1}w_1^{(l)}}{\sum_j a_{ij}w_j^{(l)}}, \dots, \frac{a_{iN}w_N^{(l)}}{\sum_j a_{ij}w_j^{(l)}}\right)$$

  lors d'une itération l précédente, où $y_i$ correspond à la mesure réalisée sur le canal i, $\dfrac{a_{i1}w_1^{(l)}}{\sum_j a_{ij}w_j^{(l)}}$ correspondent aux valeurs obtenues au cours de l'itération précédente l, pour les différents éléments $a_{ij}w_j^l$ avec j=1,..., N et pour les M canaux,

  - Utiliser les valeurs trouvées $x_{ij}^{(l+1)}$ pour déterminer selon une loi Gamma une valeur correspondant à la proportion d'un élément j,

$$w_j^{(l+1)} \sim \mathcal{G}\left(\alpha + \sum_i x_{ij}^{(l+1)}, \beta + \sum_i x_{ij}\right)$$

  avec j variant de 1 à N, sur les N spectres de référence, α, β étant des valeurs fixées,

- Déterminer une valeur estimée pour un élément j donné, $\widehat{\overline{w_j}} \approx \frac{1}{L}\sum_{l=1}^{L}\overline{w_j^l}$, et associer à cette valeur estimée de proportion d'un élément une valeur de crédibilité.

Selon une variante de réalisation, on utilise comme valeur de crédibilité, sa valeur d'écart-type a posteriori définie comme :

$$\sigma_{\widehat{\overline{w_j}}} \approx \left(\frac{1}{L-1}\sum_{l=1}^{L}\left(\overline{w_j^l} - \widehat{\overline{w_j}}\right)^2\right)^{\frac{1}{2}}$$

Selon une autre variante, on détermine un intervalle de crédibilité en utilisant la formule $\Pr\left(d_{w_j} < \hat{\overline{w}}_j < u_{w_j}\right) = A\%$ avec :

$$d_{w_j} \approx \left\{w_j^l\right\}_{l=1:L}^{\uparrow}(\lfloor aL \rfloor)$$

$$u_{w_j} \approx \left\{w_j^l\right\}_{l=1:L}^{\uparrow}(\lfloor (A+a)L \rfloor),$$

où

$\left\{w_j^l\right\}_{l=1:L}^{\uparrow}$ représente les L échantillons triés par ordre croissant,

$\left\{w_j^l\right\}_{l=1:L}^{\uparrow}$ représente la k-ième valeur des L proportions triées par ordre croissant, et

⌊⌋ désigne la valeur entière immédiatement inférieure.

On détermine, par exemple, la valeur de la proportion $\overline{w}_j^{(l+1)} \approx D\left(\alpha_1 + \sum_i x_{i1}^{(l+1)}, \ldots, \alpha_N + \sum_i x_{iN}^{(l+1)}\right)$ en utilisant une loi de Dirichlet suivant une loi Gamma.

On attribue, par exemple, un a priori à la valeur du paramètre $\beta$ et on exécute les étapes suivantes :

- Déterminer une valeur correspondant à la proportion d'un élément

$$w_j^{(l+1)} \sim \mathcal{G}\left(\alpha + \Sigma_i x_{ij}^{(l+1)}, \beta + \Sigma_i \ x_{ij}\right)$$

avec j variant de 1 à N, sur les N spectres de référence, $\beta$ suivant une loi a posteriori, et
- tirer

$$\beta^{(l+1)} \sim \mathcal{G}\left(\gamma + N\alpha, \delta + \Sigma_j w_j^{l+1}\right)$$

en suivant une loi Gamma, M étant le nombre de canaux d'énergie.

La somme des coups tirés $\overline{y}$, étant aléatoire, on utilise, par exemple, une loi non informative et on exécute au moins les étapes suivantes :

- tirer

$$\Lambda^{(l+1)} \sim \mathcal{G}\left(\overline{y}, \frac{1}{2}\right) \, ,$$

- tirer

$$x_{i=j}^{(l+1)} \sim Mult\left(y_{i;} \frac{a_{i1}w_1^{(l)}}{\Sigma_j a_{ij}w_j^{(l)}}, \ldots, \frac{a_{iN}w_N^{(l)}}{\Sigma_j a_{ij}w_j^{(l)}}\right) (i=1, \ldots, M),$$

avec M le nombre de canaux d'énergie et (j=1,..., N) où N est le nombre de spectres mesurés,
- tirer $w_j^{(l+1)} \sim \Lambda^{(l+1)} \times D\left(\alpha_1 + \Sigma_i x_{i1}^{(l+1)}, \ldots, \alpha_N + \Sigma_i x_{iN}^{(l+1)}\right)$ en utilisant un processus Dirichlet.

Le procédé est mis en œuvre pour les spectres des radioéléments suivants : le Cobalt, le Césium, l'Américium, l'Europium, l'Uranium.

D'autres caractéristiques et avantages de la présente invention apparaîtront mieux à la lecture de la description qui suit, d'exemples de réalisation donnés à titre illustratif et nullement limitatif, annexée des figures qui représentent :

- Figure 1, un exemple de système pour la mise en œuvre du procédé selon l'invention,
- Figure 2, un exemple de spectre en énergie présenté sous la forme d'un histogramme,
- Figure 3, une succession d'étapes mises en œuvre par une variante du procédé selon l'invention,
- Figures 4A, 4B, 4C et 4D, des résultats comparatifs obtenus pour estimer des proportions d'Américium 241, d'Europium 152, Cobalt 60, en mettant en œuvre une méthode ML-EM et le procédé selon l'invention,
- Figures 5A, 5B, 5C et 5D, des résultats pour estimer des proportions d'Américium 241, Césium 137, Cobalt 60, Europium 152, Uranium 235,

- Figures 6A, 6B, 6C et 6D, des résultats pour estimer des proportions d'Américium 241, Cobalt 60, Europium 152, et
- Figures 7A, 7B, 7C et 7D, des résultats pour estimer des proportions d'Américium 241, Césium 137, Cobalt 60, Europium 152, Uranium 235.

Afin de mieux faire comprendre l'objet de l'invention, la description qui suit est donnée à titre illustratif et nullement limitatif pour la détection de radioéléments présents dans une zone délimitée dans laquelle opère un robot. Sans sortir du cadre de l'invention, il est bien entendu que le procédé peut s'appliquer pour la détection de tout corpuscule ou élément dont le résultat de mesures peut se présenter sous la forme d'un spectre en énergie représentatif d'un nombre de particules mesurées dans une bande d'énergie donnée sur plusieurs canaux.

En résumé, le procédé selon l'invention repose sur la mise en œuvre d'un algorithme de simulation de type échantillonneur de Gibbs qui permet, à partir d'un modèle génératif bayésien, d'obtenir la distribution a posteriori des proportions $w_i$ d'éléments radioactifs présents dans le spectre et, après convergence, de fournir une estimation de W correspondant à N spectres, en calculant la moyenne a posteriori des tirages obtenus et de caractériser la quantité d'un radioélément présent dans un spectre et l'incertitude associée à cette quantité (par exemple sous forme d'une valeur d'écart-type, d'intervalle de crédibilité).

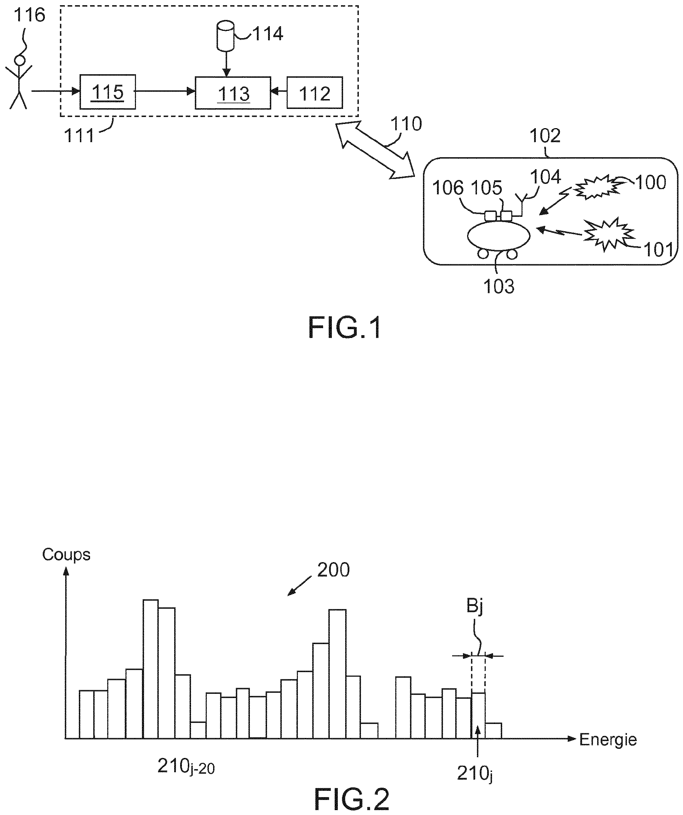

La figure 1 schématise un exemple de système pour l'identification de radioéléments présents dans une ou plusieurs sources 100, 101 qui émettent dans une zone 102. Un robot mobile 103 comprend un détecteur de rayonnement 104 relié par exemple à un circuit d'amplification 105 et à des moyens de communication 106 permettant le transfert des mesures via un medium de communication 110 vers un dispositif de traitement 111. Le dispositif de traitement 111 comprend par exemple, un récepteur 112 des données mesurées, un calculateur 113 adapté à exécuter les étapes du procédé selon l'invention et à déterminer notamment la proportion des corpuscules ou éléments détectés, ainsi qu'un paramètre indiquant un degré de certitude sur la mesure de détection et d'identification d'un élément, une mémoire ou base de données 114 et un dispositif d'affichage 115 contrôlé par un opérateur par exemple. Le détecteur est un détecteur de rayonnement connu de l'homme du métier.

La figure 2 donne un exemple de mesure de spectre en énergie 200 présenté sous forme d'histogramme avec en abscisse le niveau d'énergie et en ordonnées le nombre de coups. Un canal d'histogramme j correspond par exemple à un intervalle d'énergie $B_j$. Les quantités à mesurer, par exemple des photons, sont classées par canaux en fonction de leur niveau d'énergie. Ces canaux $210_j$ sont appelés des canaux d'accumulation et l'ensemble de ces canaux d'accumulation est représentatif d'un spectre. La quantité mesurée pour un canal correspond à un nombre d'événements mesurés appelés aussi coups. Pour chaque canal d'accumulation, les coups mesurés sont comptabilisés. Les coups correspondent à des quantités représentatives des interactions entre les corpuscules à mesurer et le capteur utilisé pour obtenir l'histogramme. Lorsqu'un corpuscule est détecté par le détecteur, un coup est comptabilisé. L'association d'une valeur d'énergie à un canal $B_j$ est réalisée préalablement par une étape de calibration. Après calibration, l'accumulation dans les canaux d'énergie permet ainsi de réaliser une spectrométrie.

Le procédé selon l'invention fait notamment appel à des spectres en énergie qui auront été préétablis lors d'essais, par exemple, et seront utilisés comme données de référence. Dans certains cas, il sera possible d'établir ces spectres au cours du procédé et/ou de les mettre à jour avec les mesures réalisées. A chaque radioélément correspond une signature dans le spectre mesuré.

Pour la mise en œuvre du procédé, dans l'exemple donné, on fait appel à une modélisation de la matrice des réalisations de M variables de la manière suivante :

$$\begin{bmatrix} y_1 \\ \vdots \\ y_M \end{bmatrix} = P\left( \begin{bmatrix} a_{11} & \cdots & a_{1N} \\ \vdots & \ddots & \vdots \\ a_{M1} & \cdots & a_{MN} \end{bmatrix} \begin{bmatrix} w_1 \\ \vdots \\ w_N \end{bmatrix} \right) (1)$$

où $Y \sim P(AW)$, $P()$ étant une loi de Poisson

La matrice Y contient les réalisations $y_i$ de M variables indépendantes selon une loi de Poisson $P(AW)$, où $\sim$ signifie « est distribué suivant », le vecteur W correspond aux proportions d'un élément dans les N spectres mesurés. La matrice $A = A_{M \times N}$ ou matrice de projection contient N spectres de références normalisés, chaque élément de matrice $a_{ij}$ est égal à la probabilité qu'un photon d'énergie i provienne du spectre caractéristique de l'élément j, la somme de la k-ième colonne de la matrice $\sum_{i=1}^{M} a_{ik}$ est égale à 1 avec k le numéro de colonne, i un canal d'énergie ; les N spectres sont codés sur M canaux d'énergies organisés en colonnes dont la somme vaut 1. Autrement dit, la première colonne $a_{j1}$ de la matrice A contient le premier spectre normalisé et ainsi de suite jusqu'à la N-ième colonne qui contient le N-

ième spectre normalisé.

$$\overline{y} = \sum_{i=1}^{M} y_i \text{ et } \overline{w_j} = \frac{w_j}{\sum_j w_j}.$$

On note,

On dispose d'un vecteur $Y_{M \times 1}$ de M canaux d'énergie résultant de la somme de N variables aléatoires $x_{ij}$ suivant la loi de Poisson avec :

$$y_i = \sum_{j=1}^{N} x_{ij} \, (i = 1, \ldots, M)$$

coefficient du vecteur $Y_{M \times 1}$ avec i=1...M,

$x_{ij} \sim P(a_{ij} w_j)$ est un terme qui représente la contribution du j-ème élément représenté par son spectre de référence au i-ème canal du spectre observé, $P$ correspond à la loi de Poisson,

$$w_j \sim \mathcal{G}(\alpha, \beta),$$

le coefficient de pondération associé à la mesure d'un élément j, avec $\mathcal{G}$ la loi Gamma connue de l'homme du métier et rappelée en annexe.

Les paramètres a, β peuvent être considérés comme fixes et sont prédéfinis. Dans la pratique, une hypothèse possible est de considérer que le spectre mesuré n'est constitué que de peu d'éléments, autrement dit qu'un grand nombre de coefficients de proportion $w_j$ correspondant à la présence d'un radioélément j dans le spectre mesuré seront nuls. Cette hypothèse se traduit en donnant à α des valeurs inférieures à 1. De manière générale, les coefficients α et β seront, par exemple, fixés par un utilisateur, en tenant compte d'une connaissance a priori des radioéléments qui pourraient être présents dans un environnement donné. Par exemple, si l'on suppose la présence de deux éléments présents en majorité, on prendra par exemple a=0,5 et β=1.

Au préalable à la mise en œuvre du procédé, une liste de radioéléments à détecter et les raies énergétiques qui leur sont associées auront été déterminés. Ces données peuvent être obtenues par simulation ou encore résulter de mesures préalables - permettant d'obtenir les spectres de référence (normalisés) constituant la matrice A - à la mise en œuvre du procédé. Les données sont mémorisées dans une mémoire du dispositif, par exemple dans la base de données 114.

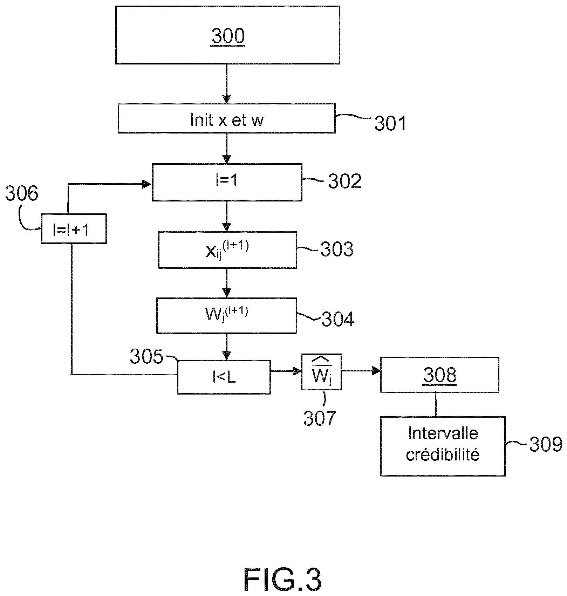

Selon une première variante de réalisation, schématisée à la figure 3 et à la figure 1, le procédé comporte au moins les étapes suivantes :

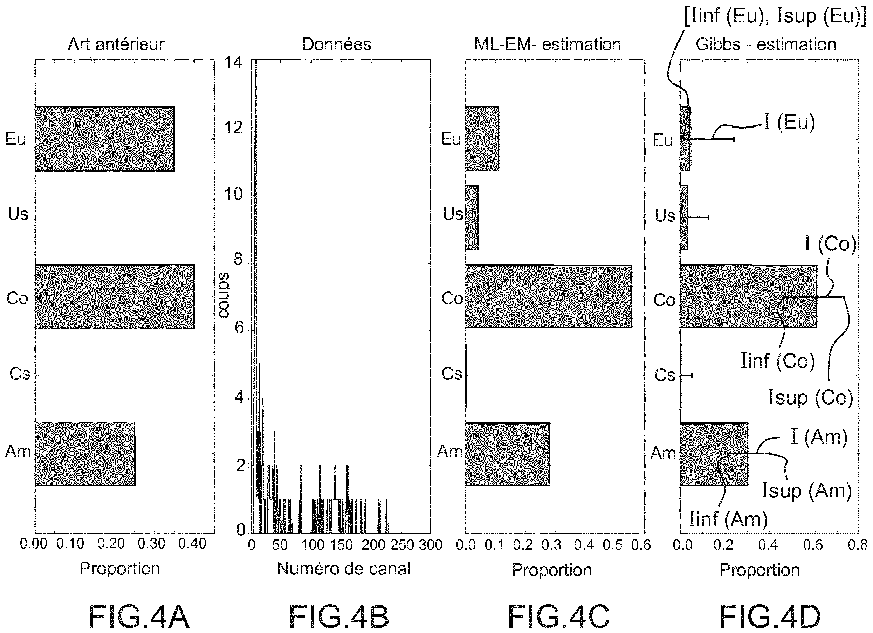

- Un opérateur 116 déclenche une ou plusieurs mesures des rayonnements issus d'une ou de plusieurs sources 100, 101 (figure 1), les signaux sont détectés par le détecteur du robot et transmis au dispositif de traitement 111, via les moyens de communication 106, 110,
- Les signaux détectés sont mis en forme par le processeur 113, les données se présentant sous la forme d'un spectre d'énergie, en coups et à M canaux, (figure 4A, par exemple),
- Le procédé va ensuite traiter les données du spectre mesuré en exécutant par exemple les étapes décrites ci-après.

On définit un nombre d'itérations L en fonction de l'application, L est par exemple de l'ordre de quelques milliers,

- 301 - On initialise avec des valeurs aléatoires le vecteur W des proportions des radioéléments présents dans le spectre et le vecteur x des contributions des éléments représentés par leur spectre de référence aux M canaux du spectre,
- Soit Y le spectre mesuré, 300, on utilise l'échantillonneur de Gibbs pour identifier les éléments,
- Pour l=1 à L, 302, 305, 306, on va exécuter au moins les deux étapes suivantes :

  - 303 - tirer une composante $x_{ij}^{(l+1)}$ du vecteur Y du spectre observé pour l'itération l+1, pour un élément j donné et un canal de référence i :

$$x_{ij}^{(l+1)} \sim Mult\left( y_i, \frac{a_{i1} w_1^{(l)}}{\sum_j a_{ij} w_j^{(l)}}, \ldots \frac{a_{iN} w_N^{(l)}}{\sum_j a_{ij} w_j^{(l)}} \right)$$

avec (i=1, , M) et (j=1,..., N), en utilisant une loi multinomiale *Mult();* on considère que la contribution des autres éléments (sauf j) ne varie pas. La valeur $y_i$ correspondant à la mesure réalisée sur le canal i, on prend en compte les valeurs $\dfrac{a_{i1}w_1^{(l)}}{\sum_j a_{ij}w_j^{(l)}}$ obtenues au cours de l'itération précédente l, pour les différents éléments $a_{iN}w_N^{(l)}$ avec j=1,.., N et pour les M canaux, les valeurs $x_{ij}^{(l+1)}$ trouvées à la première étape sont utilisées lors de la deuxième étape qui met en œuvre une loi Gamma,

La manière de tirer une variable est par exemple décrite dans le document de Luc Devroye disponible sur Internet sous la référence « Non-Uniform Random Variate Génération » aux éditions Springer-Verlag, New York, 1986, Cette manière de procéder est valable pour déterminer les valeurs de la loi Gamma,

- 304 - tirer une valeur correspondant à la proportion $w_j^{(l+1)}$ associée à un élément j pour l'itération l+1, en utilisant une loi Gamma,

$$w_j^{(l+1)} \sim \mathcal{G}\left(\alpha + \sum_i x_{ij}^{(l+1)}, \beta + \sum_i x_{ij}\right)$$

avec j variant de 1 à N, sur les N spectres de référence.

A l'issue des L itérations, on dispose d'un ensemble de valeurs correspondant à la proportion $\overline{w_j} = \dfrac{w_j}{\sum_j w_j}$ des j éléments présents dans les rayonnements reçus au niveau du détecteur et on en déduit une valeur estimée de la proportion $\overline{w_j}$ de chaque élément j, 307:

$$\widehat{\overline{w_j}} \approx \frac{1}{L}\sum_{l=1}^{L} \overline{w_j^l} \ .$$

On déduit ensuite la valeur d'écart type a posteriori, 308, pour chacune des valeurs de proportion estimées :

$$\sigma_{\widehat{\overline{w_j}}} \approx \left(\frac{1}{L-1}\sum_{l=1}^{L}\left(\overline{w_j^l} - \widehat{\overline{w_j}}\right)^2\right)^{\frac{1}{2}}.$$

Un opérateur va donc disposer des proportions estimées pour un radioélément j ainsi que de son écart type. Le procédé offre ainsi une première estimation de la quantité d'un élément présent dans le spectre avec une valeur d'écart-type, ce qui donne un résultat avec une précision supérieure à la précision obtenue par la mise en œuvre des procédés connus de l'art antérieur.

Une fois ces résultats obtenus, une étape suivante consiste, par exemple, à définir un intervalle de crédibilité, 309 pour une valeur donnée, par exemple à A%=95%. L'intervalle de crédibilité sert à quantifier une incertitude sur la proportion estimée d'un radioélément présent dans un spectre. L'intervalle de crédibilité est borné par une borne inférieure et une borne supérieure, [$l_{inf}$, $l_{sup}$]. Des exemples sont donnés dans la suite de la description.

Les intervalles sont définis, dans cet exemple, par $\Pr\left(d_{w_j} < \widehat{\overline{w}}_j < u_{w_j}\right) = 0.95 = A\%$, et ils sont évalués selon les expressions :

$$d_{w_j} \approx \left\{w_j^l\right\}_{l=1:L}^{\uparrow}\left(\lfloor 0.025L\rfloor\right)$$

$$u_{w_j} \approx \left\{w_j^l\right\}_{l=1:L}^{\uparrow}\left(\lfloor 0.0975L\rfloor\right),$$

où

$$\left\{w_j^l\right\}_{l=1:L}^{\uparrow}$$ représente les L échantillons triés par ordre croissant,

$$\left\{w_j^l\right\}_{l=1:L}^{\uparrow}$$ représente la k-ième valeur des L proportions triées par ordre croissant, et

⌊⌋ désigne la valeur entière immédiatement inférieure.

Ces intervalles constituent un apport d'information important, quel que soit le nombre de photons accumulés dans le spectre. En particulier, lorsque la borne inférieure est proche de zéro, l'opérateur peut interpréter ce résultat en indiquant que l'élément a peu de chance d'être présent étant donné le spectre observé. La largeur de ces intervalles indique aussi le degré de confiance à accorder au résultat de proportion obtenu.

A l'issue des étapes du procédé selon l'invention, l'opérateur dispose donc des valeurs de la proportion de radioéléments se présentant, par exemple, sous la forme d'un graphe dont un exemple est donné à la figure 4D qui représente les proportions des radioéléments recherchés, dans cet exemple l'Américium 241, Am, l'Europium 152, Eu, et le Cobalt 60, Co, ainsi que l'intervalle de crédibilité permettant de quantifier l'incertitude de la valeur obtenue pour une quantité d'un élément donné dans le spectre.

Les résultats donnés aux figures suivantes sont issus de données simulées à partir d'un projecteur constitué par des spectres de référence d'Américium 241, Césium 137, Cs, Cobalt 60, Europium 152 et Uranium 235, U5, construits par un spectromètre standard constitué d'un détecteur CdZnTe sur 256 canaux par la mise en œuvre du procédé selon l'invention. A titre de comparaison, les figures correspondent aux résultats obtenus avec l'algorithme ML-EM selon l'art antérieur et avec l'échantillonneur de Gibbs selon l'invention, avec les intervalles de crédibilité. Ces intervalles constituent une information importante quel que soit le nombre de photons accumulés dans le spectre, mais d'autant plus lorsque celui-ci est faible.

Sur les figures 4A à 4D ont été représentés, de gauche à droite, figure 4A les proportions simulées des éléments, figure 4B les données mesurées par numéro de canal, figure 4C la proportion des éléments obtenus par une méthode ML-EM de l'art antérieur et figure 4D les résultats obtenus par la mise en œuvre du procédé selon l'invention. La figure 4D indique pour chaque radioélément, la valeur de la proportion mesurée et un intervalle d'incertitude ou de crédibilité I(élément)=[I$_{inf}$(élément), I$_{sup}$(élément)] avec comme exemple d'élément, l'Américium, le Cobalt, le Césium, l'Europium, l'Uranium, associé à la valeur mesurée. Ces intervalles de crédibilité constituent un apport d'information important pour l'utilisateur. Lorsque la borne inférieure I$_{inf}$ est proche de zéro, l'opérateur peut interpréter ce résultat en déduisant que, la source émettant un radioélément donné a peu de chance d'être présente, étant donné le spectre observé. La largeur de ces intervalles indique aussi le degré de confiance à accorder au résultat.

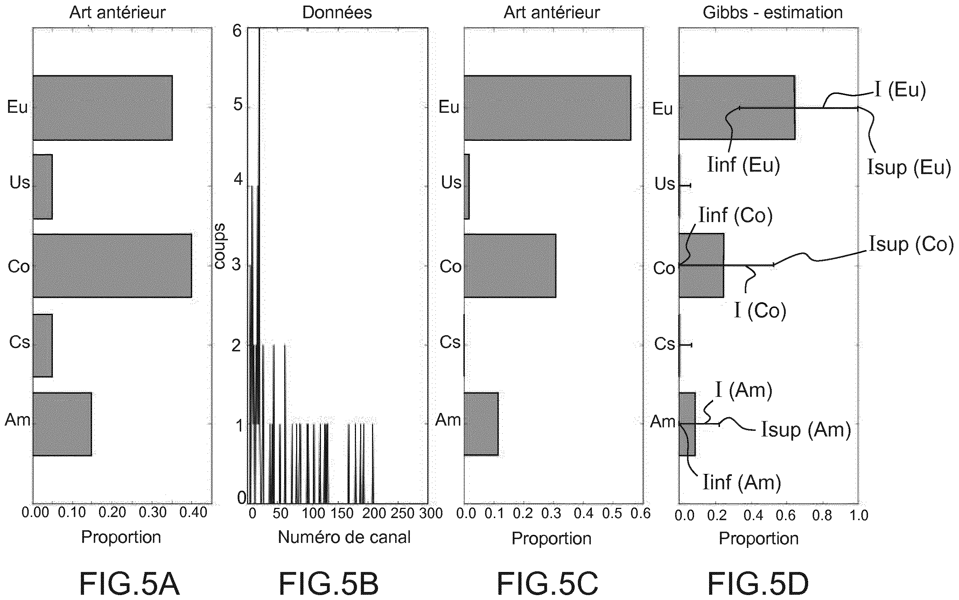

Les figures 5A, 5B, 5C et 5D représentent les résultats d'estimation d'un mélange d'Américium 241, Césium 137, Cobalt 60, Europium 152 et Uranium 235, figure 5A les données simulées, figure 5B les données mesurées par numéro de canal, figure 5C la proportion des éléments obtenus par une méthode ML-EM de l'art antérieur et figure 5D les résultats obtenus par la mise en œuvre du procédé selon l'invention.

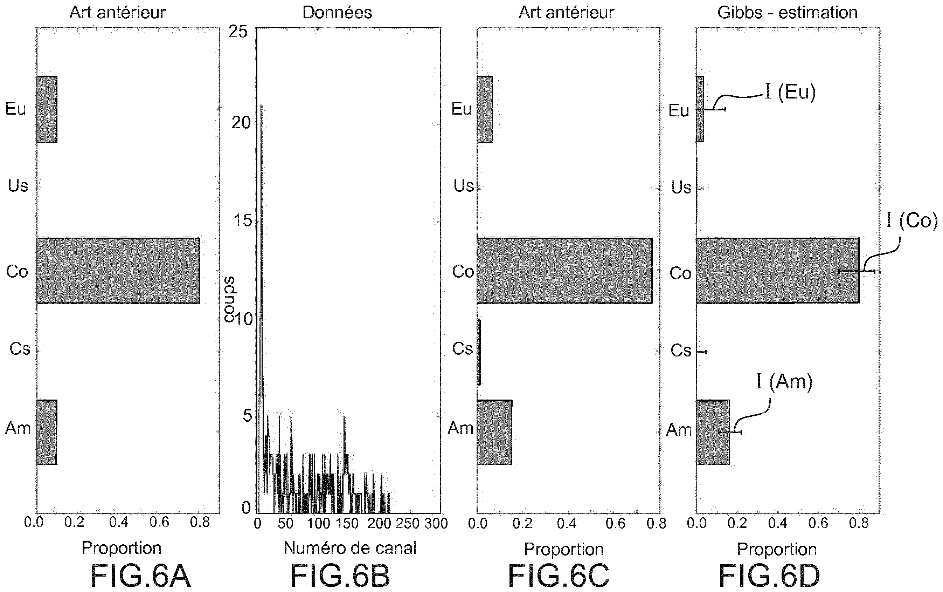

Les figures 6A, 6B, 6C et 6D représentent l'estimation des proportions d'un mélange d'Américium 241, de Cobalt 60 et d'Europium 152.

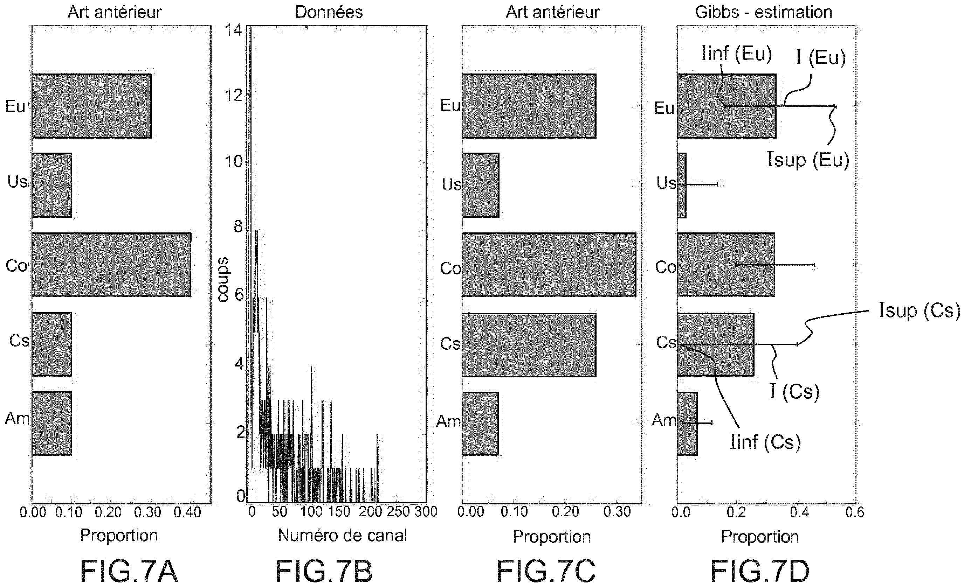

Les figures 7A, 7B, 7C et 7D représentent l'estimation des proportions d'un mélange d'Américium 241, de Césium 137, de Cobalt 60, d'Europium 152 et d'Uranium 235.

Ces figures 6A à 6D et 7A à 7D, montrent qu'il est plus probable d'observer de l'Américium que du Césium, par exemple, pour un spectre mesuré contenant moins de cent comptages.

Selon une deuxième variante de réalisation, le procédé peut comporter les étapes décrites ci-après :

- Initialisation avec des valeurs aléatoires du vecteur X dont les composantes correspondent à la contribution du j-ème élément représenté par son spectre de référence au i-ème canal du spectre observé,
- Initialisation avec des valeurs aléatoires de W et X,
- Pour l=1 à L, exécuter au moins les deux étapes :

$$x_{ij}^{(l+1)} \sim Mult\left(y_i, \frac{a_{i1}w_1^{(l)}}{\sum_j a_{ij}w_j^{(l)}}, \cdots, \frac{a_{iN}w_N^{(l)}}{\sum_j a_{ij}w_j^{(l)}}\right)$$

- 303 - tirer une loi multinomiale *Mult()*, avec (i=1, ..., M) et (j=1,..., N), selon

- 404 - en utilisant les valeurs $x_{ij}^{(l+1)}$ trouvées à la première étape, tirer

$$\overline{w}_j^{(l+1)} \sim D\left(\alpha_1 + \sum_i x_{i1}^{(l+1)}, \ldots, \alpha_N + \sum_i x_{iN}^{(l+1)}\right)$$ avec j variant de 1 à N, suivant une loi de Dirichlet. En pratique, on fixe $\alpha_1 = \ldots = \alpha_N = \alpha$.

A l'issue des L itérations, on dispose des valeurs correspondant à la proportion de radioéléments contenus dans les rayonnements reçus au niveau du détecteur et on en déduit une valeur estimée pour chaque élément j, comme il a été décrit ci-dessus pour la première mise en œuvre de l'invention.

Selon un mode de réalisation alternatif, il est possible de supposer le paramètre β comme une valeur inconnue et lui attribuer un « a priori »,

$$\beta \sim \mathcal{G}(\gamma, \delta).$$

Lorsque la valeur de β est inconnue, on peut supposer cette valeur aléatoire. Les valeurs $\gamma$, $\delta$ seront par exemple fixées à des valeurs typiques, très supérieures à un, si l'on considère une variance importante dans la loi Gamma.

Ceci conduit à une loi a posteriori

$$\beta \sim \mathcal{G}(\gamma + N\alpha, \delta + \sum_j w_j)$$

qui sera utilisée pour la mise en œuvre du procédé.

Dans cet exemple, le procédé comporte les étapes décrites ci-après.

On définit un nombre d'itérations L en fonction de l'application, L est par exemple de l'ordre de quelques milliers,

- 301 - On initialise avec des valeurs aléatoires le vecteur W des proportions et le vecteur X des contributions des éléments représentés par leur spectre de référence aux M canaux du spectre,
- Soit Y le spectre mesuré, 300, on utilise l'échantillonneur de Gibbs pour identifier les éléments,
- Pour l=1 à L, 302, 305, 306, on va exécuter au moins les trois étapes suivantes :
  - 303 - tirer une composante $x_{ij}^{(l+1)}$ du vecteur Y du spectre observé pour l'itération l+1, pour un élément j donné et un canal de référence i,

$$x_{ij}^{(l+1)} \sim Mult\left(y_{i;} \frac{a_{i1} w_1^{(l)}}{\sum_j a_{ij} w_j^{(l)}}, \ldots, \frac{a_{iN} w_N^{(l)}}{\sum_j a_{ij} w_j^{(l)}}\right)$$

avec (i=1, ...,M) et (j=1,..., N), en utilisant une loi multinomiale *Mult()*, on considère que la contribution des autres éléments, sauf j, ne varie pas, comme il a été explicité ci-avant,

Ces valeurs $x_{ij}^{(l+1)}$ trouvées à la première étape sont utilisées pour mettre en œuvre la deuxième étape,

- 504 - tirer une valeur correspondant à la proportion d'un élément j,

$$w_j^{(l+1)} \sim \mathcal{G}\left(\alpha + \sum_i x_{ij}^{(l+1)}, \beta + \sum_i x_{ij}^{(l+1)}\right)$$

avec j variant de 1 à N, sur les N spectres de référence, avec la valeur de β suivant une loi a posteriori,

- 505 - tirer

$$\beta^{(l+1)} \sim \mathcal{G}\left(\gamma + N\alpha, \delta + \sum_j w_j^{(l+1)}\right),$$

en utilisant une loi Gamma.

Selon une autre variante de réalisation, on considère que la somme des coups observés est aléatoire et on suppose une loi non informative. Le procédé va alors comporter les étapes décrites ci-après. On définit un nombre d'itérations L en fonction de l'application, L est par exemple de l'ordre de quelques milliers,

- 301 - On initialise avec des valeurs aléatoires le vecteur W des proportions et le vecteur x des contributions des éléments représentés par leur spectre de référence aux M canaux du spectre,
- Soit Y le spectre mesuré, 300, on utilise l'échantillonneur de Gibbs pour identifier les éléments,
- Pour l=1 à L, 302, 305, 306, on va exécuter au moins les trois étapes suivantes :

  - 603 - tirer

$$\Lambda^{(l+1)} \sim \mathcal{G}\left(\bar{y}, \frac{1}{2}\right)$$

suivant une loi Gamma, où A est une grandeur aléatoire centrée sur $\bar{y}$,

  - 304 - tirer $x_{ij}^{(l+1)} \sim Mult\left(y_{i;} \frac{a_{i1}w_1^{(l)}}{\sum_j a_{ij}w_j^{(l)}}, \dots, \frac{a_{iN}w_N^{(l)}}{\sum_j a_{ij}w_j^{(l)}}\right)$ (i=1, ...,M) et (j=1,..., N), en utilisant une loi multinomiale *Mult()*,

  - 605 - tirer $w_j^{(l+1)} \sim \Lambda^{(l+1)} \times D\left(\alpha_1 + \sum_i x_{i1}^{(l+1)}, \dots, \alpha_N + \sum_i x_{iN}^{(l+1)}\right)$ en utilisant la loi Dirichlet et 603.

Les méthodes précitées s'appliquent à de nombreux détecteurs, par exemple HPGe, CdZnTe ; scintillateurs, etc.

Le procédé et le système décrits ci-avant sont notamment mis en œuvre dans le contrôle d'objets et/ou de personnes pour détecter la présence d'éventuelles matières nucléaires pour la sécurité. Par exemple, ils s'appliquent dans le cadre d'une surveillance radiologique embarquée sur un robot, dans un système de type balise ou portique, de la surveillance de conduites dans une installation nucléaire, ou de la surveillance de carottages industriels lors de l'extraction de minerais.

De façon plus générale, l'invention peut s'appliquer à tout spectre contenant des données discrètes (i.e. coups) ayant pour origine des photons X, des photons de fluorescence, des neutrons, ou tout autre type de particule pourvu que l'on dispose de spectres de référence ou signatures des éléments acquis préalablement, obtenus par simulation, ou acquis et enrichis lors de la mise en œuvre du procédé.

Le procédé et le système selon l'invention offrent notamment comme avantage de fournir une quantification d'un radioélément plus fiable que les résultats offerts par les procédés de l'art antérieur en associant à une valeur estimée un intervalle de crédibilité de la valeur trouvée.

**Annexe**

L'annexe introduit les définitions des distributions de probabilité utilisées et des lois de probabilité utilisées connues de l'homme du métier.

Vraisemblance

$$\mathcal{L}(X|W) = \prod_{i=1}^{M} \prod_{j=1}^{N} \frac{(a_{ij}w_j)^{x_{ij}}}{x_{ij}!} e^{-a_{ij}w_j}$$

Loi a priori sur W

$$P\left(w_j \sim (w_j\,;\alpha,\beta)\right)$$

Loi a posteriori

En appliquant la loi de Bayes, la loi a posteriori s'écrit

$$\pi[w|x] = \mathcal{L}[x|w]p[w]$$

$$\propto \prod_{i=1}^{M}\prod_{j=1}^{N} \frac{(a_{ij}w_j)^{x_i}}{x_{ij}!} e^{-a_{ij}w_j} w_j^{\alpha-1} e^{-w_j\beta}$$

Lois conditionnelles

Les lois conditionnelles utilisées dans la présente invention se déduisent de la loi a posteriori

$$p[x_i|y_i, w_1, \dots, w_N] \sim \mathcal{M}ult\left(x_i;\ y_i, \frac{a_{1i}w_1}{\sum_{j=1}^{M} a_{ij}w_j}, \dots, \frac{a_{iN}w_N}{\sum_{j=1}^{M} a_{ij}w_j}\right) (i = 1, \dots, M)$$

$$p[w_j|x_i] \sim \mathcal{G}\left(\alpha + \sum_{i=1}^{M} x_{ij},\beta + \sum_{i=1}^{M} a_{ij}\right) (j = 1, \dots, N)$$

Loi de Poisson

Pour $\lambda>0$, et $k=0,1,..,$

$$f_{\mathcal{P}}(k;\lambda) = P(X = k) = \frac{\lambda^k}{k!} e^{-\lambda}$$

On note

$$X \sim \mathcal{P}(\lambda)$$

si X suit (i.e. est distribuée selon) une loi de Poisson de paramètre $\lambda$

Loi Gamma

Pour $x>0$ et $a>0$, $b>0$,

$$f_{\mathcal{G}}(x;a,b) = \frac{b^a x^{a-1} e^{-xb}}{\Gamma(a)}$$

on note

$$X \sim \mathcal{G}(x; a, b)$$

si X suit une loi de Gamma de paramètres a et b.

Loi multinomiale *Mult()*

Pour $x_1, x_2, ... x_k$ des entiers positifs

$$f_M(x_1, x_2, ... x_k; n, p_1, p_2, ... p_{k)} = P(X_1 = x_1, ..., X_k = x_k)$$

$$p_1, p_2, ... p_{k)}$$

$$= \begin{cases} \frac{n!}{x_1!..x_n!} p_1^{x_1} .... p_k^{x_k} \ quand \ \sum_{i=1}^{n} x_i = n \\ 0 \hspace{3cm} sinon \end{cases}$$

On note $X \sim Mult(x; n, p_1, p_2, ... p_k)$ si X suit une loi multinomiale de paramètres $n, p_1, p_2, ... p_k$

Loi de Dirichlet

Pour $\alpha_i > 0, x_i > 0, i = 1, ..., K$ et tels que $\sum_{i=1}^{K-1} x_i < 1$ et $x_K = 1 - \sum_{i=1}^{K-1} x_i,$

$$f_D(x_1, x_2, ..., x_k; n, \alpha_1, ..., \alpha_K) = \frac{\Gamma(\alpha_1 + \cdots + \alpha_K)}{\Gamma(\alpha_1) ... \Gamma(\alpha_K)} x_1^{\alpha_1 - 1} ... x_K^{\alpha_K - 1}$$

On note $X \sim D(\alpha_1, ..., \alpha_K)$ si X suit une loi de Dirichlet de paramètres $\alpha_1, ..., \alpha_K$.

Lien entre loi Gamma et Dirichlet

$$U_k \sim \mathcal{G}(\alpha_k, 1) \text{ et } V_k \sim \frac{U_k}{\sum_{j=1}^{K} U_j}$$

alors $V \sim D(\alpha_1, ..., \alpha_K)$.

## Revendications

1. Procédé pour détecter et quantifier la présence d'éléments ou de corpuscules par spectrométrie en utilisant la connaissance d'un ou de plusieurs spectres de référence, **caractérisé en ce qu'**il comporte au moins les étapes suivantes :

   • Mesurer un ou plusieurs rayonnements issus d'une ou plusieurs sources (100, 101) contenant lesdits éléments, représenter lesdites mesures sous la forme d'un spectre Y exprimé sous la forme d'un vecteur $Y_{M \times 1}$ de M canaux d'énergie résultant de la somme des N spectres de référence, chaque composante du vecteur $Y_{M \times 1}$ correspondant à la somme des contributions d'un j-ème élément représenté par son spectre de référence au i-ème canal du spectre observé pour N spectres mesurés, un élément étant associé à une proportion :

$$\begin{bmatrix} y_1 \\ \vdots \\ y_M \end{bmatrix} = P\left( \begin{bmatrix} a_{11} & \cdots & a_{1N} \\ \vdots & \ddots & \vdots \\ a_{M1} & \cdots & a_{MN} \end{bmatrix} \begin{bmatrix} w_1 \\ \vdots \\ w_N \end{bmatrix} \right)$$

$$y_i = \sum_{j=1}^{N} x_{ij} \, (i = 1, \ldots, M)$$

avec coefficient du vecteur $Y_{M \times 1}$ avec i=1...M canaux d'énergie et j=1,.., N spectres mesurés, (301) Initialiser avec des valeurs aléatoires le vecteur W des proportions des radioéléments présents dans le spectre et le vecteur X des contributions des éléments représentés par leur spectre de référence aux M canaux d'énergie,

• Définir un nombre L d'itérations et exécuter au moins les deux étapes suivantes pour l=1 à L,

• (303) Tirer une composante $x_{ij}^{(l+1)}$ du vecteur Y du spectre observé correspondant à l'itération (l+1) pour un élément j donné et un canal de référence i, en utilisant une loi multinomiale *Mult()* et en considérant les valeurs obtenues lors d'une itération l précédente,

$$Mult\left( y_{i;} \; \frac{a_{i1}w_1^{(l)}}{\sum_j a_{ij}w_j^{(l)}}, \ldots, \frac{a_{iN}w_N^{(l)}}{\sum_j a_{ij}w_j^{(l)}} \right)$$

où $y_i$ correspond à la mesure réalisée sur le canal i, $\dfrac{a_{i1}w_1^{(l)}}{\sum_j a_{ij}w_j^{(l)}}$ correspondent aux valeurs obtenues au cours de l'itération précédente l, pour les différents éléments $a_{ij}w_j^l$ avec j=1,..., N et pour les M canaux,

• (304) Utiliser les valeurs trouvées $x_{ij}^{(l+1)}$ pour déterminer selon une loi Gamma une valeur correspondant à la proportion d'un élément j,

$$w_j^{(l+1)} \sim \mathcal{G}\left( \alpha + \sum_i x_{ij}^{(l+1)}, \beta + \sum_i x_{ij} \right)$$

avec j variant de 1 à N, sur les N spectres de référence, a, β étant des valeurs fixées,

• (307) Déterminer une valeur estimée pour un élément j donné, $\widehat{w_j} \approx \frac{1}{L}\sum_{l=1}^{L} \overline{w}_j^l$, et associer à cette valeur estimée de proportion d'un élément une valeur de crédibilité.

2. Procédé selon la revendication 1 **caractérisé en ce que** l'on utilise comme valeur de crédibilité la valeur d'écart-type a posteriori de ladite valeur estimée définie comme :

$$\sigma_{\widehat{w_J}} \approx \left( \frac{1}{L-1} \sum_{l=1}^{L} \left( \overline{w}_j^l - \widehat{w_j} \right)^2 \right)^{\frac{1}{2}}$$

3. Procédé selon la revendication 1 **caractérisé en ce que** l'on détermine un intervalle de crédibilité en utilisant la formule $\Pr\left( d_{w_j} < \hat{\widehat{w}}_j < u_{w_j} \right) = A\%$ avec :

$$d_{w_j} \approx \left\{ w_j^l \right\}_{l=1:L}^{\uparrow} (\lfloor aL \rfloor)$$

$$u_{w_j} \approx \left\{ w_j^l \right\}_{l=1:L}^{\uparrow} (\lfloor (A+a)L \rfloor),$$

où

$\left\{ w_j^l \right\}_{l=1:L}^{\uparrow}$ représente les L échantillons triés par ordre croissant,

$\left\{ w_j^l \right\}_{l=1:L}^{\uparrow}$ représente la k-ième valeur des L proportions triées par ordre croissant, et

⌊⌋ désigne la valeur entière immédiatement inférieure.

4. Procédé selon l'une des revendications 1 à 3 **caractérisé en ce que** l'on détermine la valeur de la proportion

$$\overline{w}_j^{(l+1)} \approx D\left( \alpha_1 + \sum_i x_{i1}^{(l+1)}, \ldots, \alpha_N + \sum_i x_{iN}^{(l+1)} \right)$$ en utilisant une loi de Dirichlet suivant la loi Gamma.

5. Procédé selon l'une des revendications 1 à 3 **caractérisé en ce que** l'on attribue un a priori à la valeur du paramètre $\beta$ et on exécute les étapes suivantes :

   • Déterminer une valeur correspondant à la proportion d'un élément

   $$w_j^{(l+1)} \sim \mathcal{G}\left( \alpha + \sum_i x_{ij}^{(l+1)}, \beta + \sum_i x_{ij} \right)$$

   avec j variant de 1 à N, sur les N spectres de référence, (504), $\beta$ suivant une loi a posteriori, et
   • Tirer

   $$\beta^{(l+1)} \sim \mathcal{G}\left( \gamma + N\alpha, \delta + \sum_j w_j^{l+1} \right),$$

   (505) en suivant une loi Gamma, M est le nombre de canaux d'énergie.

6. Procédé selon l'une des revendications 1 à 3 **caractérisé en ce que** la somme des coups tirés $\overline{y}$, étant aléatoire, on utilise une loi non informative et on exécute au moins les étapes suivantes:

   • (603) - tirer

   $$\Lambda^{(l+1)} \sim \mathcal{G}\left( \overline{y}, \frac{1}{2} \right)$$

   • (304) - tirer $$x_{ij}^{(l+1)} \sim Mult\left( y_{i;} \frac{a_{i1} w_1^{(l)}}{\sum_j a_{ij} w_j^{(l)}}, \ldots, \frac{a_{iN} w_N^{(l)}}{\sum_j a_{ij} w_j^{(l)}} \right) \quad (i=1, \ldots, M) \quad M$$ le nombre de canaux d'énergie et (j=1,..., N) N le nombre de spectres mesurés,

   • (605) - tirer $$w_j^{(l+1)} \sim \Lambda^{(l+1)} \times D\left( \alpha_1 + \sum_i x_{i1}^{(l+1)}, \ldots, \alpha_N + \sum_i x_{iN}^{(l+1)} \right)$$ en utilisant un processus Dirichlet.

7. Procédé selon l'une des revendications 1 à 3 **caractérisé en ce que** l'on utilise les spectres des radioéléments suivants : le Cobalt, le Césium, l'Américium, l'Europium, l'Uranium.

**Patentansprüche**

1. Verfahren zum Erkennen und Quantifizieren der Anwesenheit von Elementen oder Korpuskeln durch Spektrometrie unter Nutzung der Kenntnis von einem oder mehreren Referenzspektren, **dadurch gekennzeichnet, dass** es wenigstens die folgenden Schritte beinhaltet:

   • Messen einer oder mehrerer Strahlungen, die von einer oder mehreren die Elemente enthaltenden Quellen (100, 101) kommen, Darstellen der Messwerte in Form eines Y-Spektrums, ausgedrückt in Form eines Vektors $Y_{Mx1}$ von M Energiekanälen, der von der Summe von N Referenzspektren resultiert, wobei jede Komponente des Vektors $Y_{Mx1}$ der Summe der Beiträge eines j-ten Elements entspricht, dargestellt durch sein Referenzspektrum auf dem i-ten Kanal des Spektrums, beobachtet für N gemessene Spektren, wobei ein Element assoziiert ist mit dem Anteil:

$$\begin{bmatrix} y_1 \\ \vdots \\ y_M \end{bmatrix} = P\left( \begin{bmatrix} a_{11} & \cdots & a_{1N} \\ \vdots & \ddots & \vdots \\ a_{M1} & \cdots & a_{MN} \end{bmatrix} \begin{bmatrix} w_1 \\ \vdots \\ w_N \end{bmatrix} \right)$$

$$y_i = \sum_{j=1}^{N} x_{ij} \, (i = 1, \ldots, M)$$

wobei der Koeffizient des Vektors $Y_{M \times 1}$ ist, mit i=1...M Energiekanälen und j=1,..., N gemessenen Spektren,
   • Initialisieren (301), mit zufälligen Werten, des Vektors W der Anteile der in dem Spektrum vorhandenen Radioelemente und des Vektors X der Beiträge der Elemente, dargestellt durch ihr Referenzspektrum auf den M Energiekanälen,
   • Definieren einer Anzahl L von Iterationen und Ausführen wenigstens der folgenden zwei Schritte für *l*=1 bis L,
      • Herleiten (303) einer Komponente $x_{ij}^{(l+1)}$ des Vektors Y des beobachteten Spektrums entsprechend der Iteration (*l*+1) für ein gegebenes Element j und einen Referenzkanal i unter Nutzung eines multinomialen Gesetzes *Mult()* und unter Berücksichtigung der bei einer vorherigen Iteration *l* erhaltenen Werte,

$$Mult\left( y_{i;} \frac{a_{i1}w_1^{(l)}}{\sum_j a_{ij}w_j^{(l)}}, \ldots, \frac{a_{iN}w_N^{(l)}}{\sum_j a_{ij}w_j^{(l)}} \right)$$

wobei $y_i$ dem auf dem Kanal i realisierten Messwert entspricht, $\dfrac{a_{i1}w_1^{(l)}}{\sum_j a_{ij}w_j^{(l)}}$ den im Laufe der vorherigen Iteration *l* erhaltenen Werte entspricht, für die verschiedenen Elemente $a_{ij}w_j^{l}$, mit j=1,..., N und für die M Kanäle,
      • Benutzen (304) der gefundenen Werte $x_{ij}^{(l+1)}$ zum Bestimmen, gemäß einem Gamma-Gesetz, eines Wertes entsprechend dem Anteil eines Elements j,

$$w_j^{(l+1)} \sim \mathcal{G}\left( \alpha + \sum_i x_{ij}^{(l+1)}, \beta + \sum_i x_{ij} \right),$$

wobei j zwischen 1 und N variiert, auf den N Referenzspektren, wobei $\alpha$, $\beta$ feste Werte sind,
   • Bestimmen (307) eines geschätzten Wertes für ein gegebenes Element j, $\widehat{\widehat{w_j}} \approx \frac{1}{L} \sum_{l=1}^{L} \overline{w_j^l}$, und Assoziieren eines Glaubwürdigkeitswerts mit diesem geschätzten Wert des Anteils eines Elements.

2. Verfahren nach Anspruch 1, **dadurch gekennzeichnet, dass** der a posteriori Standardabweichungswert des Schätzwertes als Glaubwürdigkeitswert benutzt wird, definiert als:

$$\sigma_{\widehat{\overline{w_j}}} \approx \left( \frac{1}{L-1} \sum_{l=1}^{L} \left( \overline{w}_j^l - \widehat{\overline{w_j}} \right)^2 \right)^{\frac{1}{2}}$$

3. Verfahren nach Anspruch 1, **dadurch gekennzeichnet, dass** ein Glaubwürdigkeitsintervalls anhand der Formel

$$\Pr\left( d_{w_j} < \hat{\tilde{w}}_j < u_{w_j} \right) = A\%$$ bestimmt wird, mit:

$$d_{w_j} \approx \left\{ w_j^l \right\}_{l=1:L}^{\uparrow} (\lfloor aL \rfloor)$$

$$u_{w_j} \approx \left\{ w_j^l \right\}_{l=1:L}^{\uparrow} (\lfloor (A+a)L \rfloor),$$

wobei

$\left\{ w_j^l \right\}_{l=1:L}^{\uparrow}$ die L Samples repräsentiert, die in aufsteigender Reihenfolge sortiert sind,

$\left\{ w_j^l \right\}_{l=1:L}^{\uparrow}$ den k-ten Wert der L Anteile repräsentiert, die in aufsteigender Reihenfolge sortiert sind, und ⊔ den unmittelbar darunter liegenden ganzen Wert bezeichnet.

4. Verfahren nach einem der Ansprüche 1 bis 3, **dadurch gekennzeichnet, dass** der Wert des Anteils $\overline{w}_j^{(l+1)} \approx D\left( \alpha_1 + \sum_i x_{i1}^{(l+1)}, \ldots, \alpha_N + \sum_i x_{iN}^{(l+1)} \right)$ unter Verwendung eines Dirichlet-Gesetzes gemäß dem Gamma-Gesetz bestimmt wird.

5. Verfahren nach einem der Ansprüche 1 bis 3, **dadurch gekennzeichnet, dass** dem Wert des Parameters β a priori eins zugeordnet wird und die folgenden Schritte durchgeführt werden:

   • Bestimmen (504) eines Wertes entsprechend dem Anteil eines Elements

$$w_j^{(l+1)} \sim \mathcal{G}\left( \alpha + \Sigma_i x_{ij}^{(l+1)}, \beta + \Sigma_i \ x_{ij} \right),$$

   wobei j zwischen 1 und N variiert, auf den N Referenzspektren, wobei β einem a posteriori Gesetz folgt, und
   • Herleiten (505) von

$$\beta^{(l+1)} \sim \mathcal{G}\left( \gamma + N\alpha, \delta + \Sigma_j w_j^{l+1} \right)$$

   gemäß einem Gamma-Gesetz, wobei M die Zahl von Energiekanälen ist.

6. Verfahren nach einem der Ansprüche 1 bis 3, **dadurch gekennzeichnet, dass**, da die Summe der Herleitungen $\overline{y}$ zufällig ist, ein nicht-informatives Gesetz benutzt wird und wenigstens die folgenden Schritte durchgeführt werden:

   • Herleiten (603) von

$$\Lambda^{(l+1)} \sim \mathcal{G}\left(\bar{y}, \frac{1}{2}\right);$$

$$x_{ij}^{(l+1)} \sim Mult\left(y_{i;} \frac{a_{i1}w_1^{(l)}}{\sum_j a_{ij}w_j^{(l)}}, \dots, \frac{a_{iN}w_N^{(l)}}{\sum_j a_{ij}w_j^{(l)}}\right) \ (i=1, \ .,M),$$

- Herleiten (304) von wobei M die Anzahl von Energiekanälen ist und (j=1,..., N) die Anzahl von gemessenen Spektren ist,

- Herleiten (605) von $w_j^{(l+1)} \sim \Lambda^{(l+1)} \times D\left(\alpha_1 + \sum_i x_{i1}^{(l+1)}, \dots, \alpha_N + \sum_i x_{iN}^{(l+1)}\right)$ unter Nutzung eines Dirichlet-Prozesses.

7. Verfahren nach einem der Ansprüche 1 bis 3, **dadurch gekennzeichnet, dass** die Spektren der folgenden Radioelemente benutzt werden: Kobalt, Cäsium, Americium, Europium, Uran.

**Claims**

1. A method for detecting and quantifying the presence of elements or of corpuscles by spectrometry using knowledge of one or more reference spectra, **characterised in that** it comprises at least the following steps:

   - measuring one or more radiation originating from one or more sources (100, 101) containing said elements, representing said measurements in the form of a spectrum Y expressed in the form of a vector $Y_{Mx1}$ of M energy channels resulting from the sum of the N reference spectra, each component of the vector $Y_{Mx1}$ corresponding to the sum of the contributions of a j-th element represented by its reference spectrum on the i-th channel of the spectrum observed for N measured spectra, an element being associated with a proportion:

$$\begin{bmatrix} y_1 \\ \vdots \\ y_M \end{bmatrix} = P\left(\begin{bmatrix} a_{11} & \cdots & a_{1N} \\ \vdots & \ddots & \vdots \\ a_{M1} & \cdots & a_{MN} \end{bmatrix}\begin{bmatrix} w_1 \\ \vdots \\ w_N \end{bmatrix}\right),$$

with $y_i = \sum_{j=1}^{N} x_{ij} (i=1,\dots,M)$ being the coefficient of the vector $Y_{M\times1}$ with i=1...M energy channels and j=1,..., N measured spectra;

   - initialising (301) with random values the vector W of the proportions of the radioelements present in the spectrum and the vector X of the contributions of the elements represented by their reference spectrum on the M energy channels;

   - defining a number L of iterations and executing at least the following two steps for *l*=1 to L:

   - drawing (303) a component $x_{ij}^{(l+1)}$ of the vector Y of the observed spectrum corresponding to the iteration (*l*+1) for a given element j and a reference channel i, using a multinomial distribution *Mult()* and by considering the values obtained during a previous iteration *l*,

$$Mult\left(y_{i;} \frac{a_{i1}w_1^{(l)}}{\sum_j a_{ij}w_j^{(l)}}, \dots, \frac{a_{iN}w_N^{(l)}}{\sum_j a_{ij}w_j^{(l)}}\right),$$

where $y_i$ corresponds to the measurement carried out on the channel i, $\dfrac{a_{i1}w_1^{(l)}}{\sum_j a_{ij}w_j^{(l)}}$ corresponds to the values obtained during the previous iteration *l*, for the various elements $a_{ij}w_j^l$, with j=1,..., N and for the M channels;

• using (304) the found values $x_{ij}^{(l+1)}$ to determine, according to a Gamma distribution, a value corresponding to the proportion of an element j,

$$w_j^{(l+1)} \sim \mathcal{G}\left(\alpha + \Sigma_i x_{ij}^{(l+1)}, \beta + \Sigma_i x_{ij}\right),$$

with j varying from 1 to N, on the N reference spectra, with $\alpha$, $\beta$ being fixed values;

• determining (307) an estimated value for a given element j, $\widehat{\overline{w_J}} \approx \frac{1}{L}\Sigma_{l=1}^{L} \overline{w_j^l}$, and associating this estimated value of the proportion of an element with a credibility value.

2. The method as claimed in claim 1, **characterised in that** the standard deviation value a posteriori of said estimated value is used as the credibility value, defined as:

$$\sigma_{\widehat{\overline{w_J}}} \approx \left(\frac{1}{L-1} \sum_{l=1}^{L} \left(\overline{w_j^l} - \widehat{\overline{w_J}}\right)^2\right)^{\frac{1}{2}}$$

3. The method as claimed in claim 1, **characterised in that** a credibility interval is determined using the formula $\Pr\left(d_{w_j} < \hat{\overline{w}}_j < u_{w_j}\right) = A\%$, with:

$$d_{w_j} \approx \left\{w_j^l\right\}_{l=1:L}^{\uparrow} (\lfloor aL \rfloor)$$

$$u_{w_j} \approx \left\{w_j^l\right\}_{l=1:L}^{\uparrow} (\lfloor (A+a)L \rfloor),$$

where

$\left\{w_j^l\right\}_{l=1:L}^{\uparrow}$ represents the L samples drawn in ascending order,

$\left\{w_j^l\right\}_{l=1:L}^{\uparrow}$ represents the k-th value of the L proportions drawn in ascending order, and ⌊⌋ denotes the next lower integer value.

4. The method as claimed in any one of claims 1 to 3, **characterised in that** the value of the proportion $\overline{w}_j^{(l+1)} \approx D\left(\alpha_1 + \sum_i x_{i1}^{(l+1)}, \ldots, \alpha_N + \sum_i x_{iN}^{(l+1)}\right)$ is determined using a Dirichlet distribution following the Gamma distribution.

5. The method as claimed in any one of claims 1 to 3, **characterised in that** an a priori is assigned to the value of the parameter $\beta$ and the following steps are executed:

• determining (504) a value corresponding to the proportion of an element

$$w_j^{(l+1)} \sim \mathcal{G}\left(\alpha + \Sigma_i x_{ij}^{(l+1)}, \beta + \Sigma_i x_{ij}\right),$$

with j varying from 1 to N, on the N reference spectra, with $\beta$ following an a posteriori distribution; and
• drawing (505)

$$\beta^{(l+1)} \sim \mathcal{G}\left(\gamma + N\alpha, \delta + \sum_j w_j^{l+1}\right),$$

by following a Gamma distribution, with M being the number of energy channels.

6. The method as claimed in any one of claims 1 to 3, **characterised in that**, with the sum of the drawn strikes $\bar{y}$ being random, a non-informative distribution is used and at least the following steps are executed:

• drawing (603)

$$\Lambda^{(l+1)} \sim \mathcal{G}\left(\bar{y}, \frac{1}{2}\right);$$

• drawing (304) $\quad x_{ij}^{(l+1)} \sim Mult\left(y_{i;} \frac{a_{i1}w_1^{(l)}}{\sum_j a_{ij}w_j^{(l)}}, \dots, \frac{a_{iN}w_N^{(l)}}{\sum_j a_{ij}w_j^{(l)}}\right)$ with M being the number of energy channels and (j=1,..., N) being the number of measured spectra;

• drawing (605) $\quad w_j^{(l+1)} \sim \Lambda^{(l+1)} \times D\left(\alpha_1 + \sum_i x_{i1}^{(l+1)}, \dots, \alpha_N + \sum_i x_{iN}^{(l+1)}\right)$ by using a Dirichlet process.

7. The method as claimed in any one of claims 1 to 3, **characterised in that** the spectra of the following radioelements are used: cobalt, caesium, americium, europium, uranium.

FIG.1

FIG.2

FIG.4A  FIG.4B  FIG.4C  FIG.4D

EP 3 391 091 B1

FIG.5A     FIG.5B     FIG.5C     FIG.5D

FIG.6A

FIG.6B

FIG.6C

FIG.6D

EP 3 391 091 B1

**FIG.7A**

**FIG.7B**

**FIG.7C**

**FIG.7D**

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070108379 A
- FR 1250431
- FR 1552415

**Littérature non-brevet citée dans la description**

- **E.BAI et al.** Detection of radionuclides from weak and poorly resolved spectra using lasso and subsampling techniques. *radiation measurements,* 2011, vol. 46 (10), 1138-1146
- **P. KUMP ; E. BAI ; K. CHAN ; W. EICHINGER.** A robust method for detecting nuclear materials when the underlying model is inexact. *Radiation Measurements,* 2013, vol. 59, 144-150
- **E. BAI ; K. CHAN ; W. EICHINGER ; P. KUMP.** Détection of radionucleides from weak and poorly resolved spectra using Lasso and subsampling techniques. *Radiation Measurements,* 2011, vol. 46 (10), 1138-1146
- **JINZHENG LI.** Statistical detection with weak signais via regularization. University de Iowa
- Non-Uniform Random Variate Génération. Springer-Verlag, 1986